Europäisches Patentamt

European Patent Office

Office européen des brevets

(19)

(11) Veröffentlichungsnummer: **0 139 082**

A2

(12) # EUROPÄISCHE PATENTANMELDUNG

(21) Anmeldenummer: **84105614.6**

(22) Anmeldetag: **17.05.84**

(51) Int. Cl.⁴: **B 60 K 26/02**

(30) Priorität: **15.09.83 DE 3333258**

(43) Veröffentlichungstag der Anmeldung:
**02.05.85 Patentblatt 85/18**

(84) Benannte Vertragsstaaten:
**BE DE FR GB NL**

(71) Anmelder: **FORD-WERKE AKTIENGESELLSCHAFT**
**Ottoplatz 2 Postfach 21 03 69**
**D-5000 Köln 21(DE)**

(84) Benannte Vertragsstaaten:
**BE DE NL**

(71) Anmelder: **FORD MOTOR COMPANY LIMITED**
**Eagle Way**
**Brentwood Essex CM13 3BW(GB)**

(84) Benannte Vertragsstaaten:
**GB**

(71) Anmelder: **FORD FRANCE SOCIETE ANONYME**
**344 Avenue Napoléon Bonaparte B.P. 307**
**F-92506 Rueil Malmaison Cedex(FR)**

(84) Benannte Vertragsstaaten:
**FR**

(72) Erfinder: **Backfisch, Kurt**
**Eifelweg 10**
**D-3501 Fuldabrück 1 (Kassel)(DE)**

(74) Vertreter: **Ritzkowsky, Harald, Dipl.-Ing. et al,**
**Ford-Werke Aktiengesellschaft Patentabteilung Z/DRR-2**
**Ottoplatz 2**
**D-5000 Köln 21(DE)**

(54) **Brems-Gas-Handsteuergerät zur Bedienung eines Kraftfahrzeuges durch beinbehinderte Fahrer.**

(57) Bei einem Brems-Gas-Handsteuergerät, bei dem ein Kraftfahrzeug mit einem als Sonderausstattung erhältlichen automatischen Getriebe vorausgesetzt wird und bei dem ein an einer Halterung unterhalb der Lenksäule angeordneter, schwenkbar gelagerter Bremshebel in einer parallel zur Lenksäule geneigten Ebene verschwenkbar ist und einen Griff zur Gasbetätigung trägt, ist mit dem Bremshebel (22) ein Griffstück (19) zur Betätigung des Gaspedales (G) über eine Schwenkverbindung (18) gekoppelt und innerhalb des als Rohr ausgebildeten Bremshebels (22) eine axial verschiebbare Arretierungsstange (26) angeordnet, die bei in Bremsstellung hochgezogenem Bremshebel (22) durch Einschieben den Bremshebel (22) in einer Rastenanordnung (29) festlegt.

EP 0 139 082 A2

./...

- 1 -

Patentanmeldung

Brems-Gas-Handsteuergerät zur Bedienung eines Kraftfahrzeuges
durch beinbehinderte Fahrer

Die Erfindung bezieht sich auf ein Brems-Gas-Handsteuergerät zur Bedienung eines Kraftfahrzeuges durch beinbehinderte Fahrer gemäß der im Oberbegriff des Patentanspruchs erläuterten Art.

Aus der DE-PS 946, 411 ist ein kombinierter, unter dem Lenkrad angeordneter Bedienungsgriff für Motorfahrzeuge zum gemeinsamen Bedienen von Kupplung, Bremse und Gasregelung bekannt, der einem beinbehinderten Fahrer die Bedienung eines Kraftfahrzeuges ermöglicht. Hierbei ist ein Kurbelgriff vorgesehen, der um zwei unterschiedliche Achsen im Raum verschwenkbar ist, um Kupplung und Bremse zu betätigen und dessen Handgriff als Drehgriff zur Betätigung des Gaspedales ausgebildet ist. Die Handhabung dieses Kurbelgriffes über die zwei im Raum liegenden Achsen erfordert große Geschicklichkeit und hohe Aufmerksamkeit. Dies steht einer Anwendung in der heutigen verkehrsreichen Zeit entgegen.

Aus der DE-AS 10 29 876 ist eine Verbesserung dieser bekannnten Einrichtung in der Weise zu entnehmen, daß für die Schwenkbewegung zur Betätigung der Fußbremse eine Rasteinrichtung vorgesehen ist, die selbsttätig beim Betätigen der Bremse einrastet und durch einen einfachen Lösehebel gelöst werden kann.

Aus der DE-OS 31 33 381 ist ein Brems-Gas-Handsteuergerät der Art zu entnehmen, von der die Erfindung ausgeht, d. h., bei dem ein Kraftfahrzeug mit einem als Sonderausstattung erhältlichen automatischen Getriebe vorausgesetzt wird. Bei dieser Einrichtung ist ein an einer Halterung unterhalb der Lenksäule angeordneter, schwenkbar gelagerter Bremshebel in einer parallel zur Lenksäule geneigten Ebene verschwenkbar und trägt einen verdrehbaren Griff zur Gasbetätigung.

- 2 -

Diese bekannte Einrichtung weist den Nachteil auf, daß eine Festlegemöglichkeit des Bremshebels nicht vorgesehen ist und daher der Fahrer sich der normalen Handbremse des Kraftfahrzeuges zusätzlich bedienen muß.

Die Aufgabe der vorliegenden Erfindung ist es, ein Brems-Gas-Handsteuergerät der im Oberbegriff des Patentanspruchs 1 erläuterten Art
derart zu verbessern, daß einerseits für den Bremshebel eine Feststellmöglichkeit vorgesehen wird, die ein Benutzen der normalen Handbremse entbehrlich macht und andererseits eine einfachere, geradlinige Gasbetätigung vorgesehen wird.

Gemäß der Erfindung wird diese Aufgabe gelöst, indem ein Brems-Gas-
Handsteuergerät gemäß dem Oberbegriff des Patentanspruchs 1 die im
Kennzeichenteil des Patentanspruchs 1 aufgezeigten Merkmale aufweist.

Dadurch, daß mit dem Bremshebel ein Griffstück zur Betätigung des
Gaspedales über eine Schwenkverbindung gekoppelt ist und innerhalb
des als ein Rohr ausgebildeten Bremshebels eine axial verschiebbare
Arretierungsstange angeordnet ist, die bei in Bremsstellung hochgezogenen Bremshebel durch Einschieben der Arretierungsstange den
Bremshebel in einer Rastenanordnung festlegt, wird dem Fahrer des
Kraftfahrzeuges insbesondere im Stop-Go-Verkehr eine wesentlich
leichtere Handhabung des Kraftfahrzeuges ermöglicht.

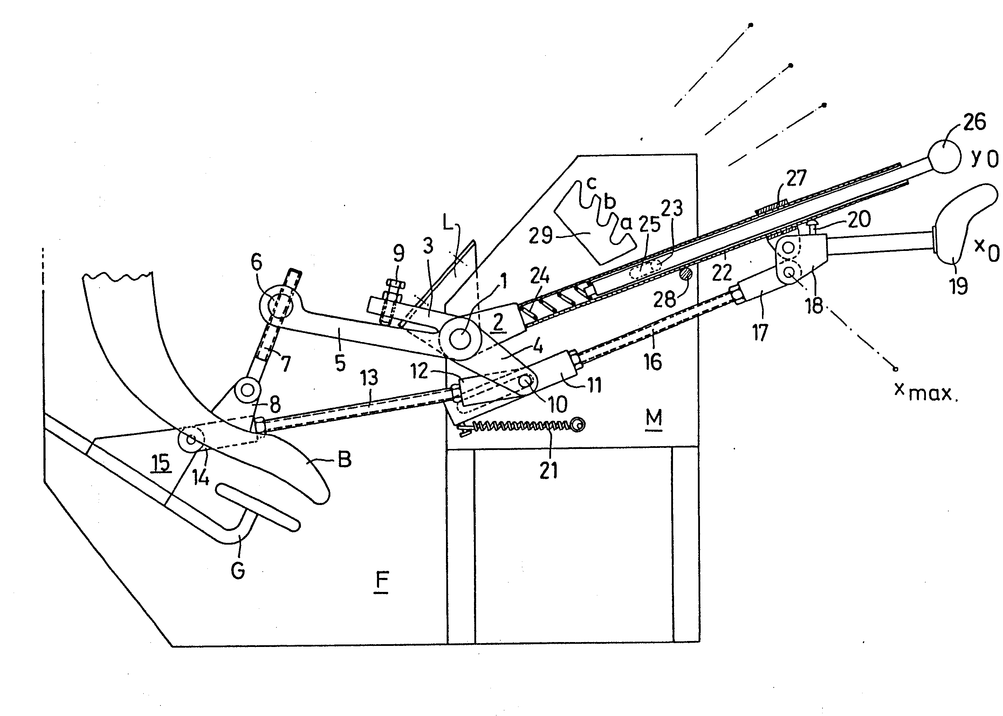

Die Erfindung wird anhand eines in der beiliegenden Zeichnung gezeigten Ausführungsbeispieles näher erläutert.

Es zeigt:

die Figur eine schematische Seitenansicht des
Brems-Gas-Handsteuergeräts gemäß der Erfindung.

Europäische Patentanmeldung 0139082

- 3 -

Im Fußraum F eines Kraftfahrzeugs ist über eine seitlich der Mittelkonsole des Fahrzeuges angeordnete Montageplatte M und eine unterhalb des Armaturenbrettes angeordnete Lageranordnung L das Brems-Gas-Handsteuergerät der Erfindung derart angeordnet, daß auch bei eingebautem Gerät die normale Bedienung des Kraftfahrzeuges sichergestellt ist.

Auf einer einerseits an der Montageplatte M und andererseits an der Lageranordnung L abgestützten Welle 1 ist ein Bremsbedienungshebelarm 2 und ein kleiner Bremshebelarm 3 fest verstiftet. Auf der Welle 1 ist weiterhin ein Gashebelarm 4 und ein großer Bremshebelarm 5 schwenkbar gelagert.

Der große Bremshebelarm 5 ist an seinem vorderen Ende mit einem beweglichen Gewinderundteil 6 versehen, das eine Augenschraube 7 aufnimmt, die über einen Bolzen und eine Konsole 8 mit dem normalen Bremspedal B fest verbunden ist. Durch eine Anschlagschraube 9 zwischen dem kleinen Bremshebelarm 3 und dem großen Bremshebelarm 5 sowie über die Augenschraube 7 sind zwei Möglichkeiten zur Bremswegeinstellung gegeben.

Der auf der Welle schwenkbare Gashebelarm 4 weist einen seitlichen Rundbolzen 10 auf, der in einer Schlitzführung eines Gewindeteiles 11 aufgenommen wird. Der Gashebelarm 4 ist mit einem weiteren Gewindeteil 12, einer Gewindestange 13 und einem Gewindeteil 14 und einem Bolzen mit einer Konsole 15 verbunden, die fest mit dem normalen Gaspedal G verbunden ist. Das Gewindeteil 11 ist über eine Gewindestange 16 mit einem Gewindeteil 17 verbunden, das über einen Bolzen schwenkbar an einer Schwenkverbindungslasche 18 angreift, an der das Griffstück 19 zur Betätigung des Brems-Gas-Handsteuergerätes angeordnet ist.

Über eine an der Schwenkverbindungslasche 18 vorgesehene Stellschraube 20 kann die Nulllage X0 in die das Griffstück nach einer Gasbetätigung über eine Zugfeder 21 zurückgeführt wird eingestellt werden.

- 4 -

Die Nulllage X0 des Griffstückes 19 wird hierbei gegenüber dem als Rohr ausgebildeten Bremshebel 22 eingestellt. Der Bremshebel 22 ist mit seinem unteren Ende mit dem Bremsbedienungshebelarm 2 verbunden und nimmt in seinem Inneren eine Arretierungsstange 26 verschiebbar auf, die entgegen der Kraft einer Druckfeder 24 in einem Langloch 25 im Rohr des Bremshebels 22 verschiebbar ist um einen Raststift 23 in unterschiedliche Rasten a, b oder c einer Rastenanordnung 29 einzulegen.

Der Bremshebel 22 wird hierbei über einen Anschlagbolzen 28 in seiner Ruhelage gehalten und steht über eine Gleitlasche 27 in gekoppelter Verbindung mit der Schwenkverbindungslasche 18, die das Griffstück 19 trägt.

Die Bedienung des erfindungsgemäßen Brems-Gas-Handsteuergerätes erfolgt auf nachfolgende Weise:

Zum Starten des Kraftfahrzeuges wird das Griffstück 19 nach oben gedrückt und durch Niederdrücken der Arretierungsstange 26 in eine der Rasten a, b oder c der Rastenanordnung 29 arretiert.

Der auf P stehende Handschalthebel eines normalen automatischen Getriebes des Kraftfahrzeuges wird in die Stellung D zur Vorwärtsfahrt gebracht.

Das Griffstück wird umfaßt und leicht nach oben gedrückt, wodurch durch die Kraft der Druckfeder 24 der Raststift 23 außer Eingriff mit der Rastenanordnung 29 kommt. Die gesamte Gestängeanordnung wird nach unten abgesenkt, wodurch die Bremse gelöst wird, wobei der Bremshebel 22 in seiner Ruhelage durch den Anschlagbolzen 28 festgelegt wird.

Bei einem darauffolgenden weiteren Niederdrücken des Griffstückes 19 verschwenkt nurmehr die Schwenkverbindungslasche 18 und betätigt hierdurch das Gaspedal G. Durch den Reibungsschluß der Gleitlasche 27 wird die jeweils eingstellte Gaspedalstellung in selbsthemmender Weise festgehalten, so daß bei Fahrt auf freier Strecke beide Hände zur Bedienung des Lenkrades frei sind.

Soll abgebremst werden, so wird das Griffstück 19 nach oben gedrückt, wodurch der Bremshebel 22 vom Anschlagbolzen 28 abgehoben wird und das Bremspedal B über die mit dem Bremshebel 22 verbundenen Bremshebelarme getätigt wird. Wird das Griffstück 19 wieder abgesenkt, kann unmittelbar wieder eine Gasbetätigung erfolgen. Erst wenn ein Halt des Kraftfahrzeuges angestrebt wird, wird bei nach oben gedrücktem Griffstück 19 die Arretierungsstange 26 durch leichtes Einschieben betätigt.

In ähnlicher Weise läuft die Bedienung des Brems-Gas-Handsteuergerätes für eine Rückwärtsfahrt ab, da hierzu lediglich erforderlich ist, den Handschalthebel des normalen Automatikgetriebes des Kraftfahrzeuges auf die Stellung R zu schalten.

Durch die am Bremshebel 22 vorgesehene Arretierungsstange 26 in Verbindung mit der Rastenanordnung 29 ist ein Halten des Kraftfahrzeuges ohne zur Hilfenahme der normalen Handbremse möglich, was insbesondere im Stop-Go-Verkehr im Stadtbereich, bei Autobahnstaufahrten und beim Anfahren am Berg zu einer wesentlichen Erleichterung der Handhabung des Kraftfahrzeuges führt.

- 1 -

Patentansprüche

1. Brems-Gas-Handsteuergerät zur Bedienung eines Kraftfahrzeuges durch beinbehinderte Fahrer, bei dem ein Kraftfahrzeug mit einem als Sonderausstattung erhältlichen automatischen Getriebe vorausgesetzt wird und bei dem ein an einer Halterung unterhalb der Lenksäule angeordneter, schwenkbar gelagerter Bremshebel in einer parallel zur Lenksäule geneigten Ebene verschwenkbar ist und einen Griff zur Gasbetätigung trägt, dadurch gekennzeichnet, daß mit dem Bremshebel (22) ein Griffstück (19) zur Betätigung des Gaspedales (G) über eine Schwenkverbindung (18) gekoppelt ist und innerhalb des als Rohr ausgebildeten Bremshebels (22) eine axial verschiebbare Arretierungsstange (26) angeordnet ist, die bei in Bremsstellung hochgezogenem Griffstück (19) und damit Bremshebel (22) durch Einschieben den Bremshebel (22) in einer Rastenanordnung (29) festlegt.

2. Brems-Gas-Handsteuergerät nach Anspruch 1, dadurch gekennzeichnet, daß die das Griffstück (19) tragende Schwenkverbindungslasche (18) über eine Gleitlasche (27) mit dem Bremshebel (22) derart verbunden ist, daß durch Selbsthemmung der Gleitlasche (27) am Bremshebel (22) die jeweils eingestellte Gasbetätigung stufenlos festlegbar ist.

3. Brems-Gas-Handsteuergerät nach den Ansprüchen 1 und 2, dadurch gekennzeichnet, daß durch an den Bremshebelarmen (3 und 5) und dem Gashebelarm (4) angeschlossene Gewindestücke (7 bzw. 11, 12, 13, 14, 16 und 17) eine individuelle Anpassung des Handsteuergerätes an unterschiedlichen Kraftfahrzeugen möglich ist.